Europäisches Patentamt

European Patent Office

Office européen des brevets

(11) Veröffentlichungsnummer: **0 480 415 B1**

(12) **EUROPÄISCHE PATENTSCHRIFT**

(45) Veröffentlichungstag der Patentschrift: **21.06.95**

(51) Int. Cl.6: **C09K 19/52**, G02F 1/137, G02F 1/133, G06F 3/033, G03B 21/56

(21) Anmeldenummer: **91117274.0**

(22) Anmeldetag: **10.10.91**

(54) **Flüssigkristallines Medium und Verfahren zur Erzeugung von Bildern.**

(30) Priorität: **12.10.90 DE 4032392**
**18.06.91 DE 4119969**
**21.12.90 DE 4041209**

(43) Veröffentlichungstag der Anmeldung:
**15.04.92 Patentblatt 92/16**

(45) Bekanntmachung des Hinweises auf die
Patenterteilung:
**21.06.95 Patentblatt 95/25**

(84) Benannte Vertragsstaaten:
**DE FR GB IT**

(56) Entgegenhaltungen:
**EP-A- 0 010 739**
**FR-A- 2 391 766**

**PATENT ABSTRACTS OF JAPAN, 12. Dezember 1990; & JP-A-22 40 192**

**WORLD PATENTS INDEX LATEST Derwent Publications Ltd., London, GB, AN 86-073610; & JP-A-61 025 126**

(73) Patentinhaber: **Eidenschink,Rudolf**
**Galileo-Galilei-Strasse 10**
**D-55129 Mainz (DE)**

(72) Erfinder: **Eidenschink, Rudolf, Dr.**
**Möhnstrasse 6**
**W-6500 Mainz (DE)**
Erfinder: **Nagel, Britta**
**Burggraben 2**
**W-6530 Bingen (DE)**

(74) Vertreter: **Dr. Fuchs, Dr. Luderschmidt Dr. Mehler, Dipl.-Ing. Weiss Patentanwälte**
**Postfach 46 60**
**D-65036 Wiesbaden (DE)**

EP 0 480 415 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

WORLD PATENTS INDEX LATEST Derwent
Publications Ltd., London, GB, AN 90-293674;
& JP-A-22 05 821

WORLD PATENTS INDEX LATEST Derwent
Publications Ltd., London, GB, AN 91-003287;
& JP-A-22 80122

MOLECULAR CRYSTALS AND LIQUID CRY-
STALS, Bd. 36, 1976, Seiten 245-253; "MA-
GNETIC PLATELETS IN A NEMATIC LIQUID
CRYSTAL (C.F.HAYES)"

## Beschreibung

Die vorliegende Erfindung hat ein flüssigkristallines Medium, ein charakteristische Eigenschaften dieses Mediums ausnutzendes Verfahren zur Darstellung von Bildern sowie danach hergestellte elektrooptische Anzeigen zum Gegenstand.

Es gibt eine Reihe verschiedener Verfahren, um mit Hilfe von thermotropen flüssigkristallinen Phasen Licht zur Darstellung von Zeichen und Bildern zu modulieren. Die am meisten verwendeten Vorrichtungen beruhen auf der Drehung der Polarisationsebene des Lichtes durch eine nematische Schicht (Übersicht bei M. Schadt, Liquid Crystals 5, 57 (1989)). Besondere technische Bedeutung hat hierbei die sog. verdrillte Zelle (TN-Zelle) gefunden. Ohne Polarisationsfolien kommt man aus, wenn durch einen Temperatur- oder Druckunterschied ein Übergang von der nematischen Phase in eine smektische Phase, die wahlweise transparent oder lichtstreuend gestaltet werden kann, herbeigeführt wird (D. Coates in Thermotropic Liquid Crystals, John Wiley Sons 1987, S. 99; FR 2 482 345). In letzter Zeit werden elektrooptische Vorrichtungen, die auf der Streuung des Lichtes an den Phasengrenzen feiner Tröpfchen eines niedermolekularen nematischen Mediums zu dem sie umschließenden Polymeren beruhen, entwickelt (PDLC-Anzeigen). Die im feldlosen Zustand zufällige Vorzugsrichtung der Ausrichtung in den einzelnen Tröpfchen verläuft in einem angelegten elektrischen Feld einheitlich. Bei Anpassung des Brechungsindex des ordentlichen Strahles des Flüssigkristalles an den Brechungsindex des Polymeren wird eine Transparenz erzeugt (vgl. J.L. West, Mol. Cryst. Liq. Cryst. 157, 427 (1988).

Diese Techniken sind für viele Anwendungsbereiche noch verbesserungsbedürftig. So leiden alle mit Polarisationsfolien arbeitenden Anzeigen an der prinzipiell geringen Lichtausbeute. Die auf einem Übergang zu einer smektischen Phase beruhenden Anzeigen können nur in engen Temperaturbereichen verwendet werden und sind nur sehr aufwendig herzustellen. Die PDLC-Anzeigen sind wegen des zusätzlichen Schrittes der Herstellung von Folien mit Tröpfchen geeigneter Abmessungen schwierig herzustellen. Außerdem müssen zur Erreichung einer großen Transparenz die Brechungsindices der beteiligten Materialien aufeinander abgestimmt werden, was bisher nur in engen Temperaturbereichen möglich ist. Vorrichtungen, die auf der Änderung der optischen Eigenschaften von flüssigkristallinen Schichten beruhen, die feste Teilchen dispergiert haben, sind bereits bekannt. In US 4,701,024 wird eine Dispersion stäbchenförmiger Körper in einer flüssigkristallinen Phase durch ein Magnetfeld ausgerichtet. In FR 25 44 731 bewirken in einer discoid-nematischen Phase verteilte ferroelektrische Teilchen in einem elektrischen Feld eine Änderung der Transparenz. Die Änderung der optischen Eigenschaften einer Dispersion von Polymerteilchen in einem flüssigkristallinen Polymeren durch Einwirkung von elektrischen Feldern oder durch Lichtenergie ist ebenfalls beschrieben (JP 01/161 222). Anstelle von Dispersionen können zur Erzeugung von Lichtstreuung auch polymere Netzwerke großer Ausdehnung in einer flüssigkristallinen Masse dienen (JP 02/70 788). Ferner ist bekannt, daß bei manchen Herstellungsverfahren von PDLC-Anzeigen neben von Polymeren umschlossenen Tröpfchen auch im geringen Maße polymere Partikel von der nematischen Phase umschlossen werden können (N. A. Vaz, Proc. Spie-Conference, Santa Clara, 1990; vgl. auch JP 02/70 788).

Auch die Qualität der vorgenannten elektrooptischen Vorrichtungen, die Dispersionen von Feststoffen in Flüssigkeiten ausnutzen, hängt von der Abstimmung der optischen Eigenschaften beider Komponenten ab. Diese ist noch sehr verbesserungsbedürftig. Die Stabilität der verwendeten Dispersionen von Festkörpern in niedermolekularen Flüssigkristallen gegenüber Sedimentationsprozessen ist gering, weshalb vorzugsweise hochviskose polymere Flüssigkristalle empfohlen werden (JP 01/161 222). Ein weiterer Nachteil, besonders im Hinblick auf elektrooptische Anzeigen mit hohen Informationsdichten ist die nur schwierig zu realisierende Bistabilität von transparentem und streuendem Zustand, die im Falle niedermolekularer nematischer Flüssigkristalle noch nicht gelungen ist.

Es ist bekannt, anorganische Partikel zur Verbesserung der Darstellbarkeit von Graustufen smektischen C-Phasen zuzusetzen (JP 2,240,192). Ferner werden solche Partikel in sehr kleinen Anteilen (0,001 bis 0,1 Gew.-%) zur Verbesserung des optischen Erscheinungsbildes monostabiler nematischer Phasen verwendet (JP 61,025,126).

Aufgabe der Erfindung ist es, ein stabiles, einfach herzustellendes flüssigkristallines Medium bereitzustellen, mit dem bistabile Bilder in optischen Vorrichtungen erzeugt werden können. Eine weitere Aufgabe der vorliegenden Erfindung ist es, eine Vorrichtung zu schaffen, die dieses Medium enthält. Außerdem ist es Aufgabe der Erfindung ein Verfahren zur Erzeugung bistabiler Bilder anzugeben.

Diese Aufgaben werden durch die Bereitstellung eines flüssigkristallinen Mediums mit den Merkmalen des Kennzeichnenden Teils des Anspruchs 1 und ein Verfahren gemäß Anspruch 12 gelöst. Vorteilhafte Ausführungsformen sowie Vorrichtungen und Anwendungen mit dem flüssigkristallinen Medium der Erfindung werden in den abhängigen Ansprüchen unter Schutz gestellt.

Es wurde überraschend gefunden, daß das erfindungsgemäße flüssigkristalline Medium in dünnen Schichten nach Anlegen eines elektrischen Feldes transparent ist und diesen Zustand nach Abschalten des Feldes weitgehend beibehält. Überraschenderweise läßt sich hieraus durch Einwirkung mechanischer Kräfte oder durch Temperaturerhöhung und anschließender Temperaturerniedrigung oder durch Einwirkung elektromagnetischer Strahlung eine starke Lichtstreuung erzeugen. Diese kann durch Einschalten des Feldes oder auch durch Temperaturerhöhung wieder zum Verschwinden gebracht werden.

Die zur Herstellung des erfindungsgemäßen flüssigkristallinen Mediums einsetzbaren Flüssigkristalle können niedermolekular oder polymer sein. Vorzugsweise sind sie niedermolekular. Sie können aus einzelnen Verbindungen oder Mischungen nematogener Verbindungen bestehen. Solche Verbindungen sind allgemein bekannt (vgl. D. Demus, H. Zaschke, Flüssige Kristalle in Tabelle Bd. I (1974) und Bd. II (1984), Leipzig). Bevorzugt sind Verbindungen der allgemeinen Formel I

$$R_1 - A_1 - Z_1 - (A_2 - Z_2 -)_n - A_3 - R_2 \qquad I,$$

worin
$R_1$ und $R_2$
unabhängig voneinander eine unsubstituierte oder mindestens einfach durch Halogen substituierte Alkyl- oder Alkenyl-Gruppe mit 1 bis 15 C-Atomen, wobei eine oder mehrere $CH_2$-Gruppen jeweils unabhängig voneinander durch -0-, -C0-, -COO-, -OOC- oder -0C00- so ersetzt sein können, daß O-Atome nicht direkt miteinander verknüpft sind, H, Halogen, -CN, $-CF_3$, $-OCHF_2$, $-OCF_3$ oder -NCS,
$A_1$, $A_2$, $A_3$
jeweils unabhängig voneinander einen unsubstituierten oder mit -CN oder mindestens einem F-Atom substituierten trans-1,4-Cyclohexylen-Rest, worin auch ein oder mehrere nicht benachbarte $CH_2$-Gruppen durch -O- und/oder -S- ersetzt sein können, einen unsubstituierten oder durch -CN oder mindestens ein Halogen-Atom substituierten 1,4-Phenylen-Rest, worin auch eine oder zwei CH-Gruppen durch N ersetzt sein können, einen 1,4-Bicyclo[2.2.2]octylen-Rest oder einen 1,3-Bicyclo-[1.1.1]pentylen-Rest,
$Z_1$, $Z_2$
jeweils unabhängig voneinander
-COO-, -OOC-, $-CH_2O-$, $-OCH_2-$, -C C-, -CH = CH-, $CH_2 CH_2$- oder die Einfachbindung
n
0, 1 oder 2
bedeuten.

Es sind 3 Arten flüssigkristalliner Phasen, die von stäbchenförmigen Molekülen gebildet werden können, bekannt, nämlich die nematische, die cholesterische und verschiedene smektische Phasen (vgl. H. Kelker, R. Hatz, Handbook of Liquid Crystals, Verlag Chemie, Weinheim 1980). Innerhalb dieser Erfindung wird die cholesterische Phase als ein Spezialfall der nematischen Phase verstanden. Innerhalb der vorliegenden Erfindung ist die nematische Phase besonders bevorzugt. Die smektische A-Phase ist ebenfalls bevorzugt. Eingeschlossen in die Erfindung ist ebenfalls die discoidnematische Phase, die von tellerförmigen Molekülen gebildet wird.

Es wurde auch gefunden, daß der in den erfindungsmäßigen elektrooptischen Vorrichtungen erreichbare, z.B. zur Darstellung von Bildern erforderliche Unterschied der Lichtdurchlässigkeit, unwesentlich von der Anpassung des Wertes des Brechungsindexes für den ordentlichen Strahl der nematischen Phase abhängt. Dagegen ist, wie bei allen Anzeigen, die auf der Bildung von flüssigkristallinen Teilvolumina mit unterschiedlichen molekularen Ausrichtungen beruhen, wie etwa Anzeigen nach dem bekannten Prinzip der dynamischen Streuung, ein hoher Wert für die optische Anisotropie $\Delta n$ der nematischen Phase vorteilhaft. $\Delta n$ ist im Falle der uniaxialen Phasen die Differenz der Brechungsindices des außerordentlichen und des ordentlichen Strahles.

Die dielektrische Anisotropie $\Delta \epsilon$ der eingesetzten nematischen Phasen kann ein positives Vorzeichen oder ein negatives Vorzeichen haben. Im ersten Falle liegt die Vorzugsrichtung der Moleküle parallel zum angelegten elektrischen Feld, im zweiten senkrecht dazu. Für eine möglichst niedrige Betriebsspannung sind hohe Beträge für $\Delta \epsilon$ vorteilhaft. Das Medium kann auch für Jalousien, die ohne elektrisches Feld auskommen, benutzt werden. Die Vorrichtung wird transparent, wenn die Übergangstemperatur der flüssigkristallinen Phase zur isotropen Phase überschritten wird, nach dem Abkühlen wird sie wieder lichtstreuend.

Die zur Herstellung des erfindungsmäßigen Mediums eingesetzte flüssigkristalline Phase kann auch zur Erzeugung besonderer Farbeffekte dichroitische Farbstoffe (vgl. R. Eidenschink, Kontakte 1984 (2) 25) gelöst enthalten. Im Vergleich zu den PDLC-Anzeigen kann der Dichroismus von Farbstofflösungen viel besser genutzt werden, weil hier die kontrastmindernde Diffusion des Farbstoffs in das Polymere entfällt. Weiter kann die kristalline Phase nichtmesogene Verbindungen enthalten, z.B. Salze zur Erzeugung elektrohydrodynamischer Effekte, Zusätze zur Veränderung der Viskosität oder zur Beeinflussung der physiko-chemischen Wechselwirkungen zwischen der Oberfläche der Partikel und der flüssigkristallinen Phase oder als Antioxidantien zur Verbesserung der Stabilität. Die vorliegende Erfindung umfaßt auch Verbindungen, die beim Abkühlen kristalline Netzwerke in der flüssigkristallinen Phase bilden, wie Alginsäure oder organische Derivate des Rizinusöls. Diese werden hier als Bestandteil der flüssigkristallinen Phase angesehen.

Die eingesetzten festen Teilchen bestehen zweckmäßig aus anorganischen Materialien, die an ihren Oberflächen durch organische Bestandteile modifiziert worden sind. Teilchen, die im wesentlichen aus Oxiden des Siliziums, Aluminiums oder Titans bestehen, sind bevorzugt. Besonders bevorzugt sind Teilchen aus pyrogener Kieselsäure und modifizierter pyrogener Kieselsäure. Die Modifikation kann durch Reaktion der ≡SiOH-Gruppe und der Oberfläche mit Organosiliziumverbindungen oder mit anderen organischen Verbindungen (vgl. M. Ettlinger et al. Arch. Pharm. 320, 1 (1987)) herbeigeführt werden. Vorteilhaft sind die Teilchen untereinander nicht durch organische Gruppen verknüpft. Im Falle der Derivatisierung der Teilchen z.B. mit Acrylatgruppen (z.B. Versuchskieselsäure R 709 der Degussa AG) können die Partikel unter Einwirkung von Licht oder nach Zugabe eines Radikalstarters untereinander oder mit einem zugefügten Präpolymeren reagieren. Allgemein gehören feste Teilchen, die durch organische Reste miteinander verknüpft sind unter der Voraussetzung in den Rahmen der Erfindung, daß sie gegeneinander genügend leicht bewegbar sind. Dies ist der Fall, wenn im flüssigkristallinen Medium die Gesamtmasse des Materials, das auf die organischen Reste, die zur Derivatisierung und zur Verknüpfung eingeführt wurden, entfällt, nicht größer ist als die Masse der ursprünglichen Teilchen. Für derivatisierte und/oder verknüpfte anorganische Partikel ist eine genügende Beweglichkeit anzunehmen, wenn der Kohlenstoffgehalt des Festkörpers, der sich aus dem flüssigkristallinen Medium durch Extraktion mit einem geeigneten Lösungsmittel isolieren läßt, unterhalb von 40 Masse-% liegt.

Das erfindungsmäßige Medium setzt sich also aus zwei Teilvolumina zusammen: dem Volumen $V_1$, das die festen Teilchen einnehmen, also dem von diesen Teilchen in einem Gas oder einer Flüssigkeit verdrängten Volumen, das nach Archimedes durch Bestimmung der Auftriebskraft ermittelt werden kann, und dem Volumen der flüssigkristallinen Phase. Da die flüssigkristalline Phase die freien Zwischenräume zwischen den dicht gepackten Teilchen einnimmt, wird das sich aus diesen beiden Teilvolumina zusammensetzende Volumen als relatives Feststoffvolumen $V_2$ bezeichnet.

Das in der vorliegenden Erfindung verwendete flüssigkristalline Medium enthält also eine flüssigkristalline Phase und in ihr dicht gepackte feste Teilchen, wobei der Quotient Q aus dem von den festen Teilchen verdrängten Volumen $V_1$ und dem relativen Feststoffvolumen $V_2$ der festen Teilchen ($Q = V_1/V_2$) zwischen 0,005 und 0,15, vorzugsweise zwischen 0,01 und 0,06 liegt. Die zur Derivatisierung von Teilchen oder zu ihrer gegenseitigen Verknüpfung eingeführten Reste gelten als Bestandteile der festen Teilchen.

Der Anteil der festen Teilchen am Gesamtvolumen des erfindungsgemäßen Mediums ist trotz ihrer dichten Packung niedrig. Die Volumenanteile der nematischen Phase und der festen Teilchen lassen sich rechnerisch aus den eingesetzten Massen und den Dichten ermitteln. Die Dichten der eingesetzten, teilchenfreien nematischen Phasen liegen zumeist im Bereich zwischen 0,95 und 1,15 $g/cm^3$. Die Dichten der eingesetzten festen Teilchen können sehr unterschiedlich Werte haben. Für hochdisperse, nach dem Aerosil-Verfahren hergestellte Metalloxide liegen die Dichten bei

2,2 $g/cm^3$ für pyrogene Kieselsäure,
2,9 $g/cm^3$ für Aluminiumoxid,
3,8 $g/cm^3$ für Titanoxid und
5,4 $g/cm^3$ für Zirkonoxid (Angaben Degussa AG, vgl. Schriftenreihe Pigmente, Nr. 56 und 60).

Es wurde überraschend festgestellt, daß sich flüssigkristalline Medien, enthaltend eine flüssigkristalline Phase und in ihr dicht gepackte feste Teilchen, wobei Q zwischen 0,005 und 0,15 beträgt und die festen Teilchen durch äußere Einwirkung gegeneinander beweglich sind, in vorzüglicher Weise zur Erzeugung von Bildern in optischen Vorrichtungen eignen. Verglichen mit den bekannten, nicht bistabilen Vorrichtungen, die polymere Netzwerke benutzen (vgl. Jp 2/70788), enthält das flüssigkristalline Medium einen hohen Volumenanteil der flüssigkristallinen Phase. Dies erlaubt die Herstellung optischer Vorrichtungen mit besonders geringem Abstand der begrenzenden Platten, was sich in Übereinstimmung mit den Gesetzten der Optik günstig auf die Qualität der Bilder auswirkt.

Die festen Teilchen des erfindungsmäßigen flüssigkristallinen Mediums haben einen Primärteilchendurchmesser von 2 bis 90 nm, vorzugsweise einen solchen von 5 bis 40 nm. Typische mittlere Teilchendurchmesser und Verteilungskurven lassen sich der Firmenschrift "Aerosil" der Degussa AG entnehmen. Hier sind auch die Phänomene der Assoziation und Agglomerisation beschrieben, die zur Bildung von Teilchen komplexer Gestalt führen. Es ist innerhalb der Erfindung möglich, verschiedene Teilchentypen mit jeweils verschiedenen Verteilungskurven und unterschiedlichen sonstigen Eigenschaften für ein Medium zu verwenden. Darüberhinaus ist es möglich, daß zur Herstellung des Mediums neben Teilchen mit einem mittleren Durchmesser im angegebenen Bereich auch solche Teilchen-Typen, deren mittlere Durchmesser oberhalb des angegebenen Bereichs liegen, eingesetzt werden. Als Teilchengröße wird bei kugeligen Teilchen der Durchmesser und bei Teilchen mit einer von der Kugelform abweichenden Form der Durchmesser einer dem Teilchen volumengleichen Kugel angesehen.

Vorteilhaft für die Erreichung der Bistabilität ist eine hohe spezifische Oberfläche der eingesetzten Teilchen, die nach der bekannten BET-Methode bestimmt werden kann. Die Werte der für die erfindungsgemäßen Dispersionen eingesetzten festen Teilchen liegen zwischen 30 (z.B. VP-Zirkonoxid, Degussa) und 700 $m^2$/g (z.B. zerteiltes Chromosorb 105, ein Polyaromat der Fa. E. Merck, Darmstadt). Die Oberflächen der Teilchen können durch Hohlräume und Gerüste erheblich größer sein als die Kugeloberfläche, die sich rechnerisch aus dem mittleren Teilchendurchmesser ergibt. Es ist möglich, die BET-Oberfläche der festen Teilchen des Mediums zu bestimmen. Zur Isolierung der Teilchen extrahiert man die Verbindungen, aus denen sich die flüssigkristalline Phase zusammensetzt, mehrmals mit einem geeigneten Lösungsmittel und befreit den verbleibenden Feststoff vom anhaftenden Lösungsmittel durch Anlegen eines Vakuums.

Für das erfindungsgemäße Verfahren zur Erzeugung eines Bildes sind die Wechselwirkungen zwischen der Oberfläche der dispergierten Teilchen und den Molekülen der nematischen Phase von Bedeutung. Neben Teilchen aus underivatisierter pyrogener Kieselsäure sind solche, die an ihren Oberflächen Trialkylsilyl-, Dimethylsilyl- und Oligo-Dimethylsiloxy-Gruppen tragen (vgl. Ettlinger), wobei sich in den jeweiligen Alkylgruppen auch Fluoratome befinden können, besonders bevorzugt. Bevorzugt sind auch Teilchen, die an Aryl- oder Alkenyl-Gruppen gebunden sind.

Um Bilder ausreichender Qualität zu erhalten, müssen die festen Teilchen ausreichend dicht gepackt sind. Sie werden in die in der Regel niederviskose nematische Phase bei Raumtemperatur eingerührt. Ist die flüssigkristalline Komponente des Mediums dagegen eine hochviskose smektische Phase, so muß das Einrühren der Teilchen bei höherer Temperatur, nämlich im Existenzbereich der nematischen oder isotropen Phase erfolgen. Eine Erhöhung der Teilchendichte kann durch Zentrifugation erfolgen. Es wurde gefunden, daß die Teilchen ausreichend dicht gepackt sind, wenn in einer 5minütigen Testzentrifugation bei einer Zentrifugalbeschleunigung zwischen 13800 und 21600 $m/sec^2$ (1407 und 2202g) Q höchstens auf das 1,7fache erhöht werden kann. Besonders vorteilhaft sind Medien, deren Q dabei auf höchstens das 1,1fache oder nicht erhöht werden kann.

Die transparenten Platten des erfindungsgemäßen elektrooptischen Anzeigeelementes bestehen in der Regel aus Glas und sind auf ihren Innenseiten mit transparenten Elektroden samt Zuführungen aus Zinn/Indium-Oxiden (ITO) versehen, wie es für TN-Zellen Stand der Technik ist. Zur Herstellung einer Anzeige kann das flüssigkristalline Medium in ausreichender Menge auf die Elektrodenseite der einen Platte gebracht werden und dann die zweite Platte so aufgedrückt werden, daß eine luftblasenfreie Schicht entsteht.

Die ITO-Elektroden der Platten können LASER-Licht absorbieren (vgl. Coates), was zur Erwärmung des Mediums, im Extremfall über den Existenzbereich der flüssigkristallinen Phase hinaus führen kann. Auch Farbstoffe, die entweder in der flüssigkristallinen Phase gelöst sind oder chemisch mit den festen Teilchen verknüpft sind, können LASER-Licht absorbieren.

Das erfindungsgemäße Medium gestattet die Herstellung eines löschbaren Datenspeichers: Ein Medium kann durch Absorption von elektromagnetischer Strahlung, z.B. LASER-Licht, von einem transparenten Zustand in einen stark lichtstreuenden Zustand überführt werden. Die so in einer optischen Vorrichtung erzeugte lichtstreuende Region kann durch Anlegen eines elektrischen Feldes an die Elektroden der Vorrichtung wieder transparent gemacht werden. Der Löschvorgang kann auch durch das elektrische Feld eines anderen LASER-Strahles erreicht werden.

Die Erzeugung stark lichtstreuender Bereiche in einer Vorrichtung, die sich im transparenten Zustand befindet, ist dadurch möglich, daß man einen Ultraschall-Strahl durch das Medium schickt. Es hat sich gezeigt, daß Ultraschall einer Frequenz von 800 kHz Bilder von deutlich besserem Kontrast liefert als ein solcher einer Frequenz von 30 kHz.

Eine Vorrichtung kann über seine ganze Fläche in den lichtstreuenden Zustand überführt werden, indem man die Platten durch eine mechanische Kraft gegeneinander bewegt. Dies kann beispielsweise durch ein elektrostriktives Element erfolgen. Die Streuung beruht auf der Bildung kleiner Bereiche mit unterschiedlicher molekularer Orientierung durch Scherwirkung.

Die Verwendung des flüssigkristallinen Mediums ist nicht auf die Erzeugung bistabiler Bilder beschränkt. Das Medium kann wegen seines hohen spezifischen elektrischen Widerstandes auch dann vorteilhaft angewandt werden, wenn eine Lichtstreuung kaum sichtbar und auch eine Bistabilität sehr klein ist. Wenn die flüssigkristalline Phase eine nematische Phase ist, kann das Medium in einer verdrillten Zelle (TN oder STN, vgl. Schadt) und zwei Polarisationsfolien verwendet werden. Der erreichbare hohe spezifische Widerstand ($>10^{12}$ $\Omega$cm) ist von besonderem Interesse für Displays mit Ansteuerung durch eine aktive Matrix (T. Shimasaka et al., Proc. Jap. Display, Sept. 1988, S. 78, Tokyo). Ein flüssigkristallines Medium aus der nematischen Phase ZLI 1132 (E. Merck, Darmstadt) und festen Teilchen aus 2 Stunden lang bei 1000 °C in einem Muffelofen erhitztem Aerosil 200 (Degussa AG) mit einem eingestellten Q von 0,005 hat einen deutlich höheren spezifischen Widerstand als ZLI 1132, dessen Ausgangswert bei $10^{11}$

Ωcm liegt.

Die folgenden Beispiele sollen die Erfindung erläutern, ohne sie zu begrenzen. Ferner bedeuten

F.        = Schmelzpunkt,
$T_{NI}$   = Übergangstemperatur von der nematischen zu isotropen Phase,
$\Delta n$ = optische Anisotropie bei 20°C,
$\Delta \epsilon$ = dielektrische Anisotropie bei 20°C,
U/min   = Umdrehungen pro Minute,
d        = Dichte in $g/cm^3$ bei 20°C

Beispiel 1

Zu 10 g der kommerziell erhältlichen nematischen Phase E7 (British Drughouse, Poole) mit einem $\Delta n$ von 0,26, einem $\Delta \epsilon$ von + 15 und einem d von 1,02 werden unter intensivem Rühren 0,41 g Aerosil 200 (Degussa AG, mittlerer Primärteilchendurchmesser 12 nm, spezifische Oberfläche 200 $m^2/g$, d = 2,2) gegeben. Diese Dispersion wird 5 cm hoch in zylinderförmige Zentrifugengläser gefüllt und in einer Laborzentrifuge bei Raumtemperatur bei 3750 U/min, wobei sich die Innenwand des Bodens der Zentrifugengläser in einem Abstand von 14 cm vom Drehzentrum befindet, 2 min lang zentrifugiert. Hiernach ergibt sich die Höhe der stark lichtstreuenden Dispersion in den Gefäßen zu 4,7 cm, die der überstehenden schwach lichtstreuenden nematischen Phase zu 0,3 cm. Der Anteil der Teilchen an der Dispersion errechnet sich zu 1,9 Volumenprozent, entsprechend einem Q von 0,019. Die überstehende, von Teilchen freie nematische Phase wird durch Abhebern entfernt. Zur Prüfung der Erhöhbarkeit der Teilchendichte werden 2 ml der Dispersion in ein mit einer Mensur versehenes Zentrifugenglas gefüllt, wobei die Füllhöhe im Glas unterhalb von 5 cm bleibt, und 5 min lang bei 3750 U/min zentrifugiert, wobei der Abstand des Glasbodens vom Drehzentrum wiederum 14 cm beträgt. Das danach abgelesene Volumen der schwach lichtstreuenden nematischen Phase beträgt 0,4 ml, das Volumen der davon gut unterscheidbaren, stark lichtstreuenden Dispersion beträgt 1,6 ml. Hieraus ergibt sich eine Erhöhung von Q auf das 1,25fache.

Beispiel 2

10 g einer nematischen Phase, bestehend aus
33,7 % 4'-Pentyl-biphenyl-4-carbonitril
19,8 % 4'-Heptyl-biphenyl-4-carbonitril
7,9 % 4'-Propyloxy-biphenyl-4-carbonitril
7,9 % 4'-Heptyloxy-biphenyl-4-carbonitril
10,9 % 4'-Octyloxy-biphenyl-4-carbonitril
5,0 % 4'-(trans-4-Pentylcyclohexyl)-biphenyl-4 = carbonitril
7,4 % 4-Ethoxy-4'-methyl-tolan
7,4 % 4-Ethyl-4'-methoxy-tolan

(Angabe in Masseprozenten)
mit einem F. von < 0°C, einem $T_{NI}$ von 57°C und einem d von 1,03 werden zusammen mit 0,20 g Aerosil R972 (silanisiert, mittlerer Primärteilchendurchmesser 16 nm, spezifische Oberfläche 110 $m^2/g$, d = 2,2) und 0,20 g Aerosil 380 (mittlerer Primärteilchendurchmesser 7 nm, spezifische Oberfläche 380 $m^2/g$) in einem Gefäß innig verrührt und anschließend durch langsames Evakuieren desselben bis auf einen Restdruck von 2 mbar von Luftblasen befreit. Die Dispersion wird in der in Beispiel 1 beschriebenen Zentrifuge behandelt, und zwar 10 min bei 3750 U/min. Aus den abgelesenen Volumina ergibt sich rechnerisch ein Anteil der festen Teilchen von 2,6 Volumenprozent, entsprechend einem Q von 0,026. Nach Abhebern der überstehenden nematischen Phase kann die Dispersion als Flüssigkristallines Medium eingesetzt werden. Auf die in Beispiel 1 gezeigte Weise wird eine Erhöhung von Q auf das 1,02fache gefunden.

Beispiel 3

Ein flüssigkristallines Medium, bereitet nach der in Beispiel 2 gezeigten Weise aus 10 g der dort aufgeführten nematischen Phase, 0,10 g Aerosil R972 und 0,30 g Aerosil 200 mit einem unter den oben definierten Bedingungen festgestellten Q von 0,027 wird in einer Dicke von 18 μm zwischen zwei Glasplatten gebracht, die auf ihren Innenseiten aufgedampfte Elektroden aus Indium/Zinn-Oxid mitsamt Zuleitungen haben, wie sie allgemein in der Anzeigetechnik gebräuchlich sind. Bei Anlegen einer Spannung von 180 V Wechselspannung (50 Hz) wird die zuvor im durchfallenden natürlichen Licht undurchsichtige Anordnung transparent (Zustand 1). Nach Abschalten der Spannung tritt eine geringfügige Trübung bei immer noch guter Transparenz auf (Zustand 2). Durch leichtes Bewegen der Platten parallel zueinander wird die Anordnung wieder undurchsichtig (Zustand 3). Die Schaltung zwischen den Zuständen 1, 2 und 3 ist wiederholbar. Die verschiedenen Grade der Lichtdurchlässigkeit werden in dieser Anzeige mit Hilfe eines Photometers (Shimadzu UV-160A) mit Licht der Wellenlänge 589 nm und einem Öffnungswinkel des durchgehenden Strahles von etwa 4° gemessen. Für Zustand 1 ergibt sich eine Extinktion von 0,110, für Zustand 2 0,131 und für Zustand 3 1,240.

Beispiel 4

Die in Beispiel 3 erwähnte Vorrichtung wird in ihrem Zustand 2 von außen mit Ultraschall (800 kHz, Wasserschicht zwischen piezoelektrischem Kristall und Glas der Vorrichtung) bestrahlt. An den Stellen der Anzeige, die von der Ultraschallquelle überstrichen werden, tritt eine starke Trübung auf, die mit der des Zustandes 3 in Beispiel 3 vergleichbar ist und die sich durch Anlegen einer Spannung von 180 V (50 Hz) in einen transparenten Zustand, vergleichbar mit Zustand 1 in Beispiel 3, überführen läßt. Nach Abschalten der Spannung läßt sich der Vorgang wiederholen.

Beispiel 5

Die in Beispiel 3 erwähnte Vorrichtung wird in ihrem Zustand 2 mit einer YAG-Laserquelle (Ytrium Aluminium Garnet) bestrahlt. An den angestrahlten Stellen tritt eine starke Trübung auf, die mit der des Zustandes 3 in Beispiel 3 vergleichbar ist und die durch Anlegen einer Wechselspannung von 180 V (50 Hz) in den transparenten Zustand, vergleichbar mit Zustand 1 in Beispiel 3, überführbar ist. Nach Abschalten der Spannung läßt sich der Vorgang des Einschreibens einer Information wiederholen.

Beispiel 6

5,0 g der flüssigkristallinen Mischung S7 (Merck Ltd., Poole) mit der Phasenfolge $S_A$-nematisch 56,1°C und nematisch-isotrop 56,8°C, d = 0,945 werden bei 60°C mit 0,52 g der pyrogenen Kieselsäure Aerosil 200 (mittlerer Durchmesser der Primärteilchen 12 nm, BET-Oberfläche 200 $m^2$/g, d = 2,2) und 0,10 g Aluminiumoxid C (Degussa AG, mittlerer Durchmesser der Primärteilchen 13 nm, BET-Oberfläche 100 $m^2$/g, d = 2,9) verrührt. Rechnerisch ergibt sich ein Q von 0,049. In einem Zentrifugierversuch zwischen 80 und 60°C in Analogie zu Beispiel 1 konnte die Teilchendichte nicht meßbar erhöht werden.

**Patentansprüche**

1. Flüssigkristallines Medium enthaltend eine nematische Phase und in ihr dicht gepackte feste Teilchen, dadurch gekennzeichnet, daß der Quotient aus dem von den festen Teilchen verdrängten Volumen und dem relativen Feststoffvolumen zwischen 0,005 und 0,15 beträgt und daß die festen Teilchen durch äußere Einwirkung gegeneinander beweglich sind.

2. Flüssigkristallines Medium nach einem der vorangehenden Ansprüche, dadurch gekennzeichnet, daß der Quotient einen Wert zwischen 0,01 und 0,06 hat.

3. Flüssigkristallines Medium nach einem der vorangehenden Ansprüche, dadurch gekennzeichnet, daß der Quotient durch Verdichten bei einer Zentrifugalbeschleunigung zwischen 13800 und 21600 m/sec$^2$ auf höchstens das 1,7-, vorzugsweise auf höchstens das 1,1fache erhöht werden kann.

4. Flüssigkristallines Medium nach einem der vorangehenden Ansprüche, dadurch gekennzeichnet, daß die eingesetzten festen Teilchen eine spezifische Oberfläche von 30 bis 700 $m^2$/g haben.

5. Flüssigkristallines Medium nach einem der vorangehenden Ansprüche, dadurch gekennzeichnet, daß der Primärteilchendurchmesser der festen Teilchen zwischen 2 und 90 nm, vorzugsweise zwischen 5 und 40 nm liegt.

6. Flüssigkristallines Medium nach einem der vorangehenden Ansprüche, dadurch gekennzeichnet, daß die festen Teilchen aus einem anorganischen Material bestehen.

7. Flüssigkristallines Medium nach Anspruch 6, dadurch gekennzeichnet, daß die festen Teilchen aus pyrogener Kieselsäure bestehen.

8. Flüssigkristallines Medium nach Anspruch 7, dadurch gekennzeichnet, daß die pyrogene Kieselsäure mit organischen Resten derivatisiert ist.

9. Vorrichtung, bestehend aus zwei Platten, von denen mindestens eine transparent ist und die auf ihren Innenseiten transparente Elektroden tragen können, dadurch gekennzeichnet, daß zwischen den Platten ein flüssigkristallines Medium nach einem der Ansprüche 1 bis 8 angeordnet ist.

10. Verfahren zur Erzeugung eines Bildes in einer Vorrichtung nach Anspruch 9, dadurch gekennzeichnet, daß man in dem sich zwischen den beiden Platten befindlichen flüssigkristallinen Medium
   - nach Variante a) durch Einwirkung einer mechanischen Kraft
   - oder nach Variante b) durch Temperaturerhöhung und anschließende Temperaturerniedrigung
   - oder nach Variante c) durch Einwirkung elektromagnetischer Wellen
   einen transparenten Bereich in einen weniger transparenten Bereich umwandelt, der durch Anlegen eines elektrischen Feldes in einen transparenten Zustand überführbar ist.

11. Verfahren zur Erzeugung eines Bildes nach Anspruch 10, dadurch gekennzeichnet, daß die Krafteinwirkung durch Ultraschall oder Verschiebung der Platten gegeneinander erfolgt.

12. Verfahren zur Erzeugung eines Bildes nach Anspruch 10, dadurch gekennzeichnet, daß die elektromagnetischen Wellen von einem LASER-Strahl herrühren.

13. Anwendung der Vorrichtung nach Anspruch 9 als Fernsehschirm, Datenspeicher oder Overhead-Projektor.

14. Anwendung des flüssigkristallinen Mediums nach den Ansprüchen 1 bis 8 mit spezifischem Widerstand >$10^{12}$ Ωcm in einer elektroopti-schen Vorrichtung nach dem Prinzip der verdrillten Zelle.

**Claims**

1. Liquid crystalline medium containing a nematic phase and solid particles tightly packed in it, characterised in that the quotient of the volume displaced by the solid particles and the relative solid volume is between 0.005 and 0.15, and in that the solid particles can be moved with respect to one another by external action.

2. Liquid crystalline medium according to one of the preceding claims, characterised in that the quotient has a value between 0.01 and 0.06.

3. Liquid crystalline medium according to one of the preceding claims, characterised in that the quotient may be increased by compacting at a centrifugal acceleration between 13,800 and 21,600 m/second$^2$ by 1.7 times at the most, preferably 1.1 times at the most.

4. Liquid crystalline medium according to one of the preceding claims, characterised in that the solid particles used have a specific surface area of 30 to 700 m$^2$/g.

5. Liquid crystalline medium according to one of the preceding claims, characterised in that the primary particle diameter of the solid particles lies between 2 and 90 nm, preferably between 5 and 40 nm.

6. Liquid crystalline medium according to one of the preceding claims, characterised in that the solid particles consist of an inorganic material.

7. Liquid crystalline medium according to claim 6, characterised in that the solid particles consist of pyrogenic silicic acid.

8. Liquid crystalline medium according to claim 7, characterised in that the pyrogenic silicic acid is derivatised using organic radicals.

9. Device comprising two plates, at least one of which is transparent and which may carry transparent electrodes on their inner sides, characterised in that a liquid crystalline medium according to one of claims 1 to 8 is arranged between the plates.

10. Process for producing an image in a device according to claim 9, characterised in that a transparent region is converted to a less transparent region, which can be transferred to a transparent state by applying an electric field, in the liquid crystalline medium situated between the two plates
   - according to variant a) by the action of a mechanical force
   - or according to variant b) by increasing temperature and subsequently lowering the temperature
   - or according to variant c) by the action of electromagnetic waves.

11. Process for producing an image according to claim 10, characterised in that the force action is carried out by means of ultrasound or displacing the plates with respect to one another.

12. Process for producing an image according to claim 10, characterised in that the electromagnetic waves originate from a LASER beam.

13. Use of the device according to claim 9 as a television screen, data store or overhead projector.

14. Use of the liquid crystalline medium according to claims 1 to 8 having specific resistance > $10^{12}$ Ωcm in an electrooptical device according to the principle of the twisted cell.

**Revendications**

1. Milieu liquide cristallin contenant une phase nématique et des particules solides serrées de façon dense dans celle-ci, caractérisé en ce que le quotient entre le volume déplacé par les particules solides et le volume de matière solide relatif se situe entre 0,005 et 0,15, et en ce que les particules solides sont susceptibles de se déplacer les unes par rapport aux autres sous l'effet d'une action extérieure.

2. Milieu liquide cristallin selon la revendication 1, caractérisé en ce que le quotient se situe entre 0,01 et 0,06.

3. Milieu liquide cristallin selon l'une des revendications précédentes, caractérisé en ce que, pour une accélération centrifuge située entre 13800 et 21600 m/sec$^2$, le quotient peut être augmenté, par densification, à 1,7 fois ce chiffre, au maximum, de préférence à 1,1 fois cette valeur.

4. Milieu liquide cristallin selon l'une des revendications précédentes, caractérisé en ce que les particules solides employées présentent une surface spécifique de 30 à 700 m$^2$/g.

5. Milieu liquide cristallin selon l'une des revendications précédentes, caractérisé en ce que le diamètre de particules primaires des particules solides se situe entre 2 et 90 nm, de préférence entra 5 et 40 nm.

6. Milieu liquide cristallin selon l'une des revendications précédentes, caractérisé en ce que les particules solides sont constituées en un matériau inorganique.

7. Milieu liquide cristallin selon la revendication 6, caractérisé en ce que les particules solides sont constituées en acide silicique pyrogéné.

8. Milieu liquide cristallin selon la revendication 7, caractérisé en ce que l'acide silicique pyrogéné est modifié avec des résidus organiques.

9. Dispositif constitué de deux plaques, dont au moins une est transparente et qui peuvent porter, sur leurs faces intérieures, des électrodes transparentes, caractérisé en ce que se trouve, entre les plaques, un milieu liquide cristallin selon l'une des revendications 1 à 8.

10. Procédé de fabrication d'une image dans un dispositif selon la revendication 9, caractérisé en ce que, dans le milieu liquide cristallin se trouvant entre les deux plaques
   - selon la variante a) par application d'une force mécanique
   - ou selon la variante b), par augmentation de la température et, ensuite, réduction de la température
   - ou, selon la variante c), par l'action d'ondes électromagnétiques
   on transforme une zone transparente en une zone moins transparente, qui peut revenir à un état transparent par application d'un champ électrique.

11. Procédé de fabrication d'une image selon la revendication 10, caractérisé en ce que l'application de force est réalisée par ultra-sons ou par déplacement des plaques les unes contre les autres.

12. Procédé de fabrication d'une image selon la revendication 10, caractérisé en ce que les ondes électromagnétiques proviennent d'un rayon laser.

13. Utilisation du dispositif selon la revendication 9 comme écran de télévision, mémoire de données, ou rétroprojecteur.

14. Utilisation du milieu liquide cristallin selon les revendications 1 à 8 avec une résistance spécifique supérieure à 10$^{12}$ ohm cm dans un dispositif électrooptique fonctionnant selon le principe de la cellule transposée.